(19) Europäisches Patentamt
European Patent Office
Office européen des brevets

(11) **EP 2 495 546 A1**

(12) # EUROPEAN PATENT APPLICATION

(43) Date of publication:
**05.09.2012 Bulletin 2012/36**

(51) Int Cl.:
***G01N 21/33*** *(2006.01)*

(21) Application number: **11168005.4**

(22) Date of filing: **29.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.03.2011 US 447941 P**

(71) Applicant: **Trinean NV**
**9050 Gentbrugge (BE)**

(72) Inventors:
• **Boonefaes, Tom**
  **8660 De Panne (BE)**
• **Luyssaert, Bert**
  **9000 Gent (BE)**

(74) Representative: **Wauters, Davy Erik Angelo et al**
**DenK iP bvba**
**Leuvensesteenweg 203**
**3190 Boortmeerbeek (BE)**

(54) **Deconvolution of spectra**

(57) A method for analyzing UV-VIS spectrophotometer data of one or more samples , the one or more samples consisting of a number of constituents, the method comprising obtaining prior information for the one or more samples regarding their constituents, obtaining UV-VIS spectrophotometer data for the one or more samples, defining a number of overlapping components contributing in the UV-VIS spectrophotometer data, the number of overlapping components comprising one or more components assigned to known constituents of the one or more samples and the number of components comprising one or more components that cannot be assigned to known constituents of the one or more samples, using the prior information for the one or more samples regarding their constituents and using the UV-VIS spectrophotometer data, estimating the constituents composition and the component contributions to the UV-VIS spectrophotometer data for the number of components for the one or more samples by minimizing a residue between the UV-VIS spectrophotometer data and a fit based on said constituent composition and said component contributions, thus obtaining information regarding the one or more components that cannot be assigned to known constituents of the one or more samples.

FIG. 2

EP 2 495 546 A1

**Description**

**Field of the invention**

The invention relates to the field of sample characterisation. More particularly, the present invention relates to methods and systems for analyzing samples using recorded spectra.

**Background of the invention**

Although numerous analysis techniques for qualification and quantification of samples exists, only few analysis techniques are as simple to perform, fast and accurate as spectrophotometry. One example of spectrophotometry is UV-VIS absorbance spectroscopy. During such experiments, samples are irradiated with UV-VIS radiation of different wavelengths, the radiation remaining after passage through the sample is detected and the absorbance at different wavelengths is determined. As particular components will show a particular absorbance at particular wavelengths, such a particular absorbance profile can be used as a fingerprint which allows, upon comparison with reference spectra, to identify the components. When more complex samples are studied, the absorbance features in the spectrum can be more broad, rendering the interpretation of spectra substantially more difficult.

A number of different spectral analysis techniques have been described in the past.

Some methods are provided allowing determining the concentration or relative concentration of components of a sample based on the approximation of the measured spectrum with a linear combination of standard, also referred to as reference, spectra of the individual components. Approximation of the measured spectrum with reference spectra may be performed using minimization techniques for fitting the reference spectra to the absorption spectra, such as for example least squares regression or least absolute deviations regression. Such methods also may be iteratively applied.

More complex methods also are known, such as methods making use of derivatives of a spectrum, as amongst others the latter may allow to increase the insensitivity to wavelength shifts. One example of a method using derivatives is the analysis of a protein mixture using the second derivative spectrum of the sample. Another known method is based on matrix computation for determining the concentration of a number of chemical components using a number of predetermined spectral data of each chemical component, whereby the number of predetermined spectral data is larger than the number of chemical components to be determined. Some of the known methods are based on cross-correlation of samples and reference spectra, both being weighted by mean transmittance per wavelength. Particular applications for analyzing samples with known composition have been described, such as for example analysis of the composition of a protein using electromagnetic spectroscopy, analysis of RNA wherein samples are chemically split in AC and GU fractions and the AC and GU composition is then determined based on absorption at 260nm. Furthermore, also some methods are known that deal with unknown component spectra. Methods are known wherein the separation of unknown component spectra from samples is based on constrained linear or quadratic programming and sample transforms, i.e. wavelet transforms. Other methods make use of approximated component spectra by point-wise cross-correlation of absorbance and making use of known concentration. Several techniques make use of principal component analysis (PCA) for obtaining diagnostically relevant reference spectra from a database of spectra associated with disease states whereby correlation with reference spectra is used to aid in the diagnosis of a new sample.

Spjotvoll et al. describe in Technometrics 24 (1982) a technique for determining spectra and concentrations of two-constituent mixtures based on a least squares estimator. A method is discussed for identification of two unknown chemical compounds and an estimation of their proportion in a set of unknown mixtures of the two compounds. It is based on a least-squares fit and principle component analysis for separation whereby additional constraints are introduced such as the sum of concentrations being equal to unity and spectra and concentrations being non-negative.

Nevertheless, there is need for a method allowing analysis of complex mixtures comprising more than two components, particularly using UV-VIS spectroscopy.

**Summary of the invention**

It is an object of embodiments of the present invention to provide good methods and systems for analyzing UV-VIS spectroscopy spectra of samples and good corresponding methods and systems for characterizing samples. The UV-VIS spectroscopy spectra may be UV-VIS absorbance spectra.

It is an advantage of embodiments of the present invention that a powerfull data analysis of UV-VIS spectroscopy spectra is obtained.

It is an advantage of embodiments according to the present invention that good quantification can be obtained, both for routine applications and more complex applications.

It is an advantage of embodiments according to the present invention that based on prior knowledge in one or more samples, accurate reference spectra can be obtained for components in the sample.

It is an advantage of embodiments according to the present invention that based on prior knowledge of reference spectra of one or more components in the one or more samples, accurate concentration information can be obtained for components in the sample.

It is an advantage that methods and systems according to embodiments of the present invention allow for obtaining relevant and conclusive results.

The above objective is accomplished by a method and device according to the present invention.

The present invention relates to a method for analyzing UV-VIS spectrophotometer data of one or more samples , the one or more samples consisting of a number of constituents, the method comprising obtaining prior information for the one or more samples regarding their constituents, obtaining UV-VIS spectrophotometer data for the one or more samples, defining a number of overlapping components contributing in the UV-VIS spectrophotometer data, the number of overlapping components comprising one or more components assigned to known constituents of the one or more samples and the number of components comprising one or more components that cannot be assigned to known constituents of the one or more samples, using the prior information for the one or more samples regarding their constituents and using the UV-VIS spectrophotometer data, estimating the constituents composition and the component contributions to the UV-VIS spectrophotometer data for the number of components for the one or more samples by minimizing a residue between the UV-VIS spectrophotometer data and a fit based on said constituent composition and said component contributions, thus obtaining information regarding the one or more components that cannot be assigned to known constituents of the one or more samples. It is an advantage of embodiments according to the present invention that the analysis method allows for accurate detection of contributions to the spectrum that stem from modified constituents, interaction of different constituents or contaminations in the one or more samples.

Estimating the constituents composition and the component contributions to the UV-VIS spectrophotometer data for the number of components for the one or more samples by minimizing a residue between the UV-VIS spectrophotometer data and a fit based on said constituent composition and said component contributions may be performed iteratively until a residue smaller than a predetermined level is obtained. It is an advantage of embodiments according to the present invention that using an iterative method an increased accuracy for the fit and the corresponding constituent composition and component contribution can be obtained.

The method furthermore may comprise cross-checking the prior information based on any or more of the constituents composition, the component contribution or the residue between the UV-VIS spectrophotometer data and the fit. It is an advantage of embodiments that a cross-check regarding the obtained results can be performed using the prior information regarding the one or more samples.

Said prior information may comprise reference contributions in UV-VIS spectrophotometer data for components assigned to known constituents and said estimating the constituents composition and the component contributions may comprise estimating the component contributions to the UV-VIS spectrophotometer for all components based on the reference contributions and determining an estimate for the constituents composition based on minimization of the residue between the UV-VIS spectrophotometer and the fit based on said estimated component contributions to the UV-VIS spectrophotometer data for all components. It is an advantage of embodiments according to the present invention that accurate composition information of the one or more samples can be obtained based on reference spectra of constituents present in the one or more samples, taking into account the presence of unknown contributions in the UV-VIS spectrophotometer data.

Said prior information may comprise constituent composition information for the one or more samples for the known constituents and said estimating the constituents composition and the component contributions may comprise estimating the constituent composition for all constituents based on the prior information on the constituent composition information for the one or more samples for the known constituents, and determining an estimate for the component contribution to the UV-VIS spectrophotometer data based on minimization of the residue between the UV-VIS spectrophotometer data and the fit based on said estimated constituent composition for all constituents. It is an advantage of embodiments according to the present invention that accurate composition information of the one or more samples can be obtained based on reference spectra of constituents present in the one or more samples, taking into account the presence of unknown contributions in the UV-VIS spectrophotometer data.

The constituent composition and the component contributions may be interrelated by a model defining weighing factors for component contributions as function of the constituent composition and wherein determining an estimate for the constituent composition or for the component contribution comprises taking into account the weighing factors. It is an advantage of embodiments according to the present invention that the composition of constituents in the samples can be taken into account.

Analysis may be performed on spectrophotometer data for a plurality of samples, and said iteratively estimating may be performed for those samples having the smallest residue.

The components that cannot be assigned to known constituents of the one or more samples may be representative for any or more of modified constituents, neighbouring effects of different constituents or contaminations in the one or more samples. Another component that advantageously can be taken into account by components that cannot be assigned to known constituents of the one or more samples may be representative for turbidity caused by concentration or aggregation effects. The method may comprise outputting a contribution related to such turbidity. It is an advantage of embodiments of the present invention that good and/or accurate quantification of components in samples showing high turbidity can be obtained, e.g. based on prior knowledge of reference spectra of components in the sample. Another component that advantageously can be taken into account by components that cannot be assigned to known constituents of the one or more samples may be representative for scatter by residual microparticles. Such particles may be non-intentionally present in the sample, such as for example introduced by earlier processing of the sample. In one example, such residual particles may be magnetical micro-particles. The method may comprise outputting a contribution related to such scattering from residual particles. It is an advantage of embodiments of the present invention that good and/or accurate quantification of components in samples comprising residual particles can be obtained, e.g. based on prior knowledge of reference spectra of components in the sample.

The method may comprise using spectrophotometric data of a plurality of samples, wherein the samples comprises at least one sample wherein at least one unknown constituent is present and at least one sample wherein the at least one unknown constituent is absent.

The constituents may comprise a plurality of oligo's and the prior information may comprise an oligonucleotide present in the sample.

The number of components may be determined by component analysis.

The number of components may be determined based on principal component analysis.

The present invention also relates to a system for analyzing UV-VIS spectrophotometer data of one or more samples , the one or more samples consisting of a number of constituents, the system comprising an input means for obtaining prior information for the one or more samples regarding their constituents and for obtaining UV-VIS spectrophotometer data for the one or more samples, a processing means programmed for defining a number of components contributing in the UV-VIS spectrophotometer data, the number of components comprising one or more components assigned to known constituents of the one or more samples and the number of components comprising one or more components that cannot be assigned to known constituents of the one or more samples, the processing means furthermore being programmed for using the prior information for the one or more samples regarding their constituents and using the UV-VIS spectrophotometer data, estimating the constituents composition and the component contributions to the UV-VIS spectrophotometer data for the number of components for the one or more samples by minimizing a residue between the UV-VIS spectrophotometer data and a fit based on said constituent composition and said component contributions, thus obtaining information regarding the one or more components that cannot be assigned to known constituents of the one or more samples.

The present invention also relates to the use of a method as described above for identifying and/or quantifying contaminants in DNA or RNA samples. Said contaminants may be protein contamination. The contaminants may be PCR-inhibiting contaminants.

The present invention also relates to the use of a method as described above for quantifying an amount of double-stranded DNA in a mixture of double-stranded DNA and single-stranded RNA or DNA.

The present invention also relates to the use of a method as described above for obtaining the composition of a polynucleotide or protein.

The present invention also relates to the use of a method as described above for quantification of the modification efficiency in a sample.

The present invention also relates to the use of a method as described above for validating a sample composition or constituent thereof.

The present invention also relates to a computer program product for, if implemented on a processing unit, performing a method as described above. It also relates to a data carrier storing the computer program product and transmission of the computer program product over a network.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

**Brief description of the drawings**

FIG. 1 illustrates a flow chart of a method for analyzing spectra according to an embodiment of the present invention.
FIG. 2 illustrates an example of data flow as can be obtained using embodiments of the present invention.
FIG. 3 illustrates an example of data flow as can be obtained using embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Where in embodiments of the present invention reference is made to spectrophotometer data, reference is made to a reflectance, transmittance or absorbance intensity at a given wavelength or as function of wavelength. Advantageously, the method can be applied to spectrophotometer data being a spectrophotometer spectrum, indicating an intensity as function of wavelength. In advantageous embodiments, the data are absorbance data, representative of the absorption that has occurred in the one or more samples.

Embodiments of the present invention are directed to methods and systems for analyzing UV-VIS spectrophotometer data. Where reference is made to UV-VIS, reference is made to a wavelength region having an upper wavelength in the region 700nm to 1100nm and a lower wavelength in the region 150nm to 300nm.

Where in embodiments of the present invention reference is made to components contributing to the UV-VIS spectrophotometer data, reference is made to components to an intensity fraction for one or more wavelengths in the spectrophotometer data, e.g. spectrophotometer spectrum. Such a component may be directly assignable to a constituent in the one or more samples or may be not or not directly assignable to a constituent in the one or more samples.

Where in embodiments of the present invention reference is made to components that cannot be assigned to known constituents of the one or more samples, reference is made to components that do not correspond with or for which it is not yet known that these correspond with a physical-chemical absorption characteristic of the constituents of the one or more samples. The components thus do not necessarily correspond to a physical-chemical absorption characteristic of the constituents. The components do not need to correspond with constituents having a significant contribution, e.g. absorbance, within the wavelength region under study.

Where in embodiments of the present invention reference is made to constituents of one or more samples, reference is made to biological or non-biological elements such as chemical elements that are present in the sample. Such constituents can for example be one of the following or elements or groups of elements thereof : biopolymers, small organic molecules, metabolites such as glucose or ethanol, proteins, peptides, nucleic acid segments, oligonucleotides, oligonucleotides containing one or more modifications such as for example fluorescent dye labels or chromophores, chemical linker modifications such as aldehyde, photphate, amine- or thiol-modifications, affinity-labels such as biotin, reactive components such as enzymes (ALP, HRP), alternative bases such as deoxyuracil, deoxyinosine, phosphothiolates, locked nucleic acids, polynucleotides, nucleotides, oligos, peptide nucleic acids, antibodies and variations thereof such as for example nanobodies or alphabodies, micro- and nanoparticles either intentionally or unintentionally added, magnetic or non-magnetic particles, lipids, micelles, vesicles, viral particles, metal-complexes, interacallating dyes and polymers such as polythiophene-derivatives, chromogens such as p-NPP, tetrazolium salts, staining reagents such as Coomassie, methyl blue, eosin, molecules such as small molecule pharmaceuticals, antibiotics or drugs, molecules with a regulatory effect in enzymatic processes such as promoters, activators, inhibitors, or cofactors, viruses, bacteria, cells, cell components, cell membranes, spores, DNA, RNA, micro-organisms and fragments and products. Such constituents also can be for example chemical elements, such as chemical elements present in a pharmaceutical or chemical product.

Where in embodiments according to the present invention reference is made to overlapping components, reference is made to the fact that the component contribution to the spectrum of such components is significant at the same wavelength or in the same wavelength range.

Where in embodiments of the present invention reference is made to turbidity, reference is made to cloudiness or haziness of a fluid caused by individual particles that are generally invisible to the naked eye.

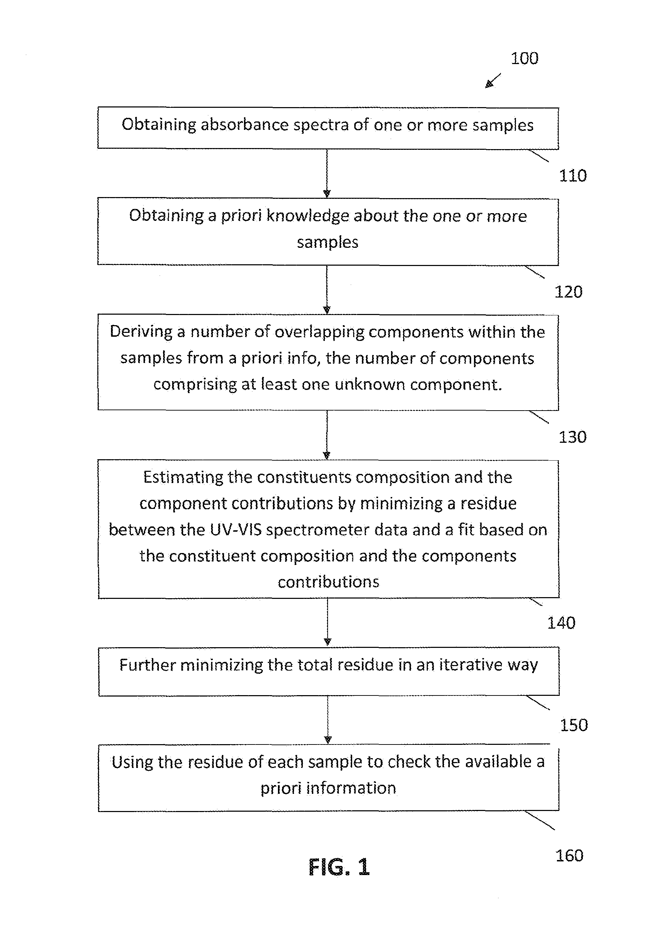

In a first aspect, the present invention relates to a method for analyzing UV-VIS spectrophotometer data of one or more samples. A typical disadvantage of UV-VIS spectrophotometer data of complex data is that different contributions e.g. corresponding with different constituents in the sample or with unknown constituents, will result in overlapping contributions. This results in broad-banded spectra, whereby the different contributions are not as such identifiable from the spectra in the form of shoulders or peaks. Embodiments of the present invention allows analyzing of UV-VIS spectrophotometer data of such complex samples resulting in spectra with broad band absorption built up by overlapping contributions. Methods according to embodiments of the present invention can be used for analysis of one or more samples. Whereas analysis of a single sample is possible, the method is especially suitable for analyzing spectrophotometer data of multiple samples. The one or more samples comprise a number of constituents. The methods according to embodiments of the present invention are especially suitable for analyzing data for samples having two or more, advantageously three or more constituents. By way of illustration, an exemplary flow chart of a method according to an embodiment of the present invention, comprising standard and optional steps is shown in FIG. 1, and will be further described with reference thereto below.

The method 100 according to embodiments of the present invention comprises obtaining 110 prior information for the one or more samples regarding their constituents. Such prior information for the one or more samples regarding their constituents may comprise in some embodiments one or more reference spectra. Such prior information alternatively or in addition thereto also may comprise expected composition information, such as for example expected concentrations, expected ratios between different constituents, etc. One example of such composition information may for example be the presence of a known polynucleotide, whereby the known polynucleotide is a known sequence of nucleotides such that known ratios of constituents, in the present example being nucleotides, are available. In some embodiments the prior information may be obtained based on the samples under study. In some embodiments the prior information may be previously stored information, such as for example previously stored reference spectra for constituents. In some embodiments a combination of such prior information also can be used.

The method also comprises obtaining 120 UV-VIS spectrophotometer data for the one or more samples. Such UV-VIS spectrophotometer data typically may be a spectrophotometer spectrum, although information at one or more individual wavelengths or wavelength ranges also may be used.

The method according to the present invention also comprises defining 130 a number of overlapping components contributing in the UV-VIS spectrophotometer data, the number of overlapping components comprising one or more components assigned to known constituents of the one or more samples and the number of components comprising one or more components that cannot be assigned to known constituents of the one or more samples. The components according to embodiments of the present invention expressing the contribution to the UV-VIS spectrophotometer data may in some embodiments comprise a spectral contribution with a shape differing from a Gaussian, Lorentzian or a mixture thereof. The shape of the spectral contribution may be a more broad contribution. Such one or more components that cannot be assigned to known constituents of the one or more samples may be as described above, such as for example modified constituents, neighboring effects between two constituents or contaminants. Defining the number of overlapping components may be based on a predetermined algorithm, a neural network, etc. The method may make use of a component analysis for defining the number of overlapping components, such as for example using a principal component analysis technique. In some embodiments the number of independent components can be obtained by putting a large number of absorbance spectra of the sample into a matrix and calculating a rank of the matrix.

The method according to the present invention furthermore comprises, using the prior information for the one or more samples regarding their constituents and using the UV-VIS spectrophotometer data, estimating 140 the constituents composition and the component contributions to the UV-VIS spectrophotometer data for the number of components for the one or more samples by minimizing a residue between the UV-VIS spectrophotometer data and a fit based on said constituent composition and said component contributions. For minimizing a residue different techniques may be employed such as for example a least square method, iterative error minimization, error entropy minimization, weighted error minimization,...

In some embodiments, the prior information comprises reference contributions in the UV-VIS spectrophotometer data, such as for example reference spectra, for components assigned to known constituents. Estimating the constituents composition and the component contributions then may comprise estimating the component contributions to the UV-VIS spectrophotometer data for all components based on the reference contributions. Based on the component contributions, an estimate of the constituent composition is then determined based on the minimization of the residue between the UV-VIS spectrophotometer and the fit based on the estimated component contributions to the UV-VIS spectrophotometer data for all components.

In some embodiments, the prior information comprises constituent composition information for the one or more samples for the known constituents. Estimating the constituents composition and the component contributions then comprises estimating the constituent composition for all constituents based on the prior information on the constituent composition information for the one or more samples for the known constituents, and determining an estimate for the component contribution to the UV-VIS spectrophotometer data based on minimization of the residue between the UV-VIS spectrophotometer data and the fit based on said estimated constituent composition for all constituents.

In some embodiments a mixture of prior information is obtained, whereby the mixture of information allows for determining an estimate of the constituents composition and the component contributions.

The constituent composition and the component contributions may be interrelated by a model defining weighing factors for component distributions as function of the constituent composition. Such weighing factors may be taken into account when determining an estimate for the constituent composition or the component contribution.

The method also may comprise repeating 150 the estimating step and fitting step for further minimizing the total residue by iteratively applying these steps. Such iteration process may be performed until the remaining residue between the UV-VIS spectrophotometer data and the fit based on the constituent composition is smaller than a predetermined value, or until a maximum number of iteration steps would be reached. The predetermined value referred to may be based on predetermined rules, based on a neural network, based on predetermined algorithms, based on information regarding the one or more samples, etc. In some embodiments, minimization of the residue may only be performed for those samples that have the smallest residue, allowing obtaining more accurate results and/or quicker convergence.

The method allows providing as an output information regarding the composition of the sample and/or information regarding the spectral contribution of constituents to the absorbance spectra. In some examples, the obtained information may allow deriving a reference spectra for a constituent, a modified constituent, a contaminant, a neighbouring effect, ... The latter can be used for setting up a library of different reference spectra compatible with different constituents or effects thereof.

In one embodiments, the method also comprises using the residue of each sample or information related thereto to check the available a priori information. In other words, the results obtained using the method can be used for cross-checking the available a priori information.

The method according to embodiments of the present invention may especially be suitable for analyzing a plurality of samples, whereby in one part of the samples the unknown component is present and in another part of the samples the unknown component is absent.

The method according to embodiments of the present invention may be implemented as software as well as hardware.

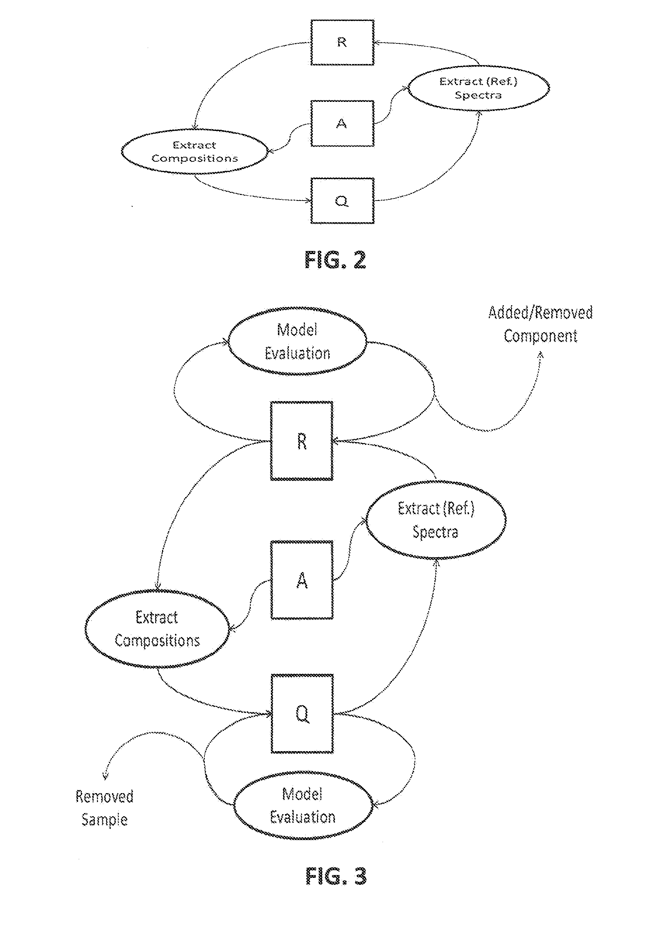

By way of illustration, embodiments of the present invention not being limited thereto, an example of how data can be combined and obtained is illustrated in FIG. 2. FIG. 2 illustrates how, according to embodiments of the present invention, based on spectrophotometer data and composition information (e.g. obtained based on prior knowledge), component contributions can be determined, e.g. in the shape of reference spectra by minimizing the residue. Based on the obtained component contributions and using the spectrophotometer data, improved estimates of the composition can be obtained. FIG. 3 illustrates a further embodiment of the present invention, whereby upon estimation of the composition information or the component contribution information, it can be decided to add an additional component or remove a component by evaluating the component contribution data obtained e.g. in the light of the expected results in view of the prior data, or it can be decided to remove a sample in the evaluation based on an evaluation of the composition information obtained e.g. in the light of the expected results in view of the prior data.

The method may be suitable for extracting quantitative information about one or more constituents in the sample and the corresponding component contribution in the UV-VIS spectrum. In some embodiments, corresponding reference spectra of known and unknown components suspected to the present in the sample, can be used for fitting the UV-VIS spectrophotometer data. The component contributions may not be limited to the reference spectra of the individual pure components, but may be extended with corrective spectral functions of components that do not necessarily correspond to a physic-chemical absorption characteristic of the component, nor does the component itself needs to show significant absorption characteristics within the wavelength region under study. In one example, one of the component contributions may be a contribution corresponding with turbidity caused by concentration or aggregation effects. In one example, one of the component contributions may be a contribution corresponding with scatter caused by residual particles, e.g. particles present due to pre-processing of the sample.

By way of illustration, embodiments of the present invention not being limited thereto, an algorithm comprising a number of particular steps will be described illustrating an exemplary way of implementing the method according to embodiments of the present invention. The method will be described using a particular mathematical matrix formalism, although embodiments of the present invention are not limited thereto another mathematical formalism also may be used. The example illustrates the methods used for deconvolution of spectrophotometric data. The illustrative algorithm detailed below is optimized for the quality control of manufactured oligonucleotides. However, the same principles can be applied for other kinds of samples, which amounts to a modification of the outlined procedures as can be understood by the person skilled in the art.

For illustrating the algorithm, a number of definitions first are provided :

$A_i$: this is a measurement (expressed in absorbances, OD10mm) where the subscript i denotes the wavelengths (ranging from 220nm to 360nm in 1nm steps, in case of nucleic acids)

$Q_j$ : this matrix contains the relative presences of the different known and unknown constituents, interaction effects, modifications or contaminations of the mixture. In the present example these can be e.g. the nucleotides A,G,C and T but also modifications (like labels) or dinucleotides such as for example AG, because some dinucleotide spectra differ from the combined spectra of their constituents. In the current algorithm dinucleotides are treated identical to modifications and contaminants. j is the number of subcomponents in the mixture.

$R_{ij}$ : the reference spectra. These are the (known) spectra of the nucleotides and the spectra of the modifications, dinucleotides and contaminants. With i the wavelengths and j the subcomponents.

When working with stored reference spectra, $R_j$, the coefficients of each reference spectrum, $Q_{ij}$, can be the unknown.

When measuring known oligonucleotides, $Q_{ij}$ is already specified and the reference spectra $R_j$ can be derived.

In reality, an iterative procedure will be used where in a first step, $R_j$ is determined and in subsequent steps $Q_{ij}$ is found and again and again.

The measurements, relative presences and contributions (in the present example being known reference spectra) are given as

$$R_{ij}Q_j = A_i \quad \text{or} \quad R\,Q = A \qquad\qquad [1]$$

The definitions in case a plurality of samples are measured result in the measurement matrix becoming

$A_{ik}$ : this is a measurement (expressed in absorbances, OD10mm) where the subscript i denotes the wavelengths (ranging from 220nm to 360nm in 1nm steps, in case of nucleic acids) and k the number of the measurements.

the coefficient matrix becoming

$Q_{jk}$ : this matrix contains the coefficients (the relative presences) of every subcomponent of the mixture. Here subcomponents can be the nucleotides A,G,C and T but also modifications (like labels) and dinucleotides (e.g. AG) and contaminants. Again j is the number of subcomponents, and k the number of measurements.

Resulting in the following equation expressing the relation between the components (in the present example known from prior info and being reference spectra R) the coefficient matrix (in the present example expressing the constituent composition) and the measurement matrix.

$$R_{ij}Q_{jk} = A_{ik} \quad \text{or} \quad R\,Q = A \qquad [2]$$

In the present example, the available prior information corresponds with the reference spectra for the constituents in the sample. In such a case both the components contribution information R and the spectrophotometer data A in equation [2] are known. To determine the sample composition Q first left-multiply the equation with the component contribution information R transposed and then left-multiply both sides of the equation with the inverse of the matrix product of the component contribution R transposed and the component contribution *R*

$$\left(R^T.R\right)^{-1}.R^T.R.Q = \left(R^T.R\right)^{-1}.R^T.A \qquad [3]$$

$$Q = \left(R^T.R\right)^{-1}.R^T.A = pinv(R).A \qquad [4]$$

This is in fact the equation for the *matrix linear regression* or *linear least squares.* The expression in the right side before the spectrophotometer data A is known as the pseudo-inverse of the matrix R and can be for example calculated using singular value decomposition.

By way of illustration, also an example for the inverse situation will de discussed, whereby constituents composition is known and whereby the reference spectra need to be determined.

Thus, the inverse problem where the coefficients of the subcomponents are known, the measurements are known and the aim is to obtain the reference spectra, is discussed below.

By transposing the entire equation [1] the following relation is obtained.

$$Q^T.R^T = A^T \qquad [5]$$

and the reference spectra can be found by

$$R^T = pinv\left(Q^T\right)A^T \qquad [6]$$

In the above two examples, the situation of known constituents is shown. In embodiments according to the present invention, at least one component corresponds with an unknown constituent. In the following, it will be considered that the component contributions comprise not only contributions in the absorbance spectra of bases, but also contributions due to environmental interaction, the presence of modifications and the presence of contaminants.

A first target for this spectral deconvolution is checking the measured spectrum of an oligonucleotide with its known base composition (e.g. AACTGCAGT). However, in this case the spectrum of the oligonucleotides is not equal to the sum of the spectra of the separate nucleotides. Not only does the spectra of the bases shift when they get incorporated into DNA, but also the environment of the base does change its absorption. For example, the absorption of A, differs when the A is the end base of an oligonucleotide, or part of an AG or AT or AA sequence. Moreover, the exact solvent or buffer also determines the absorption of an oligonucleotide. To predict the exact shape of an oligonucleotide's absorption, therefore, the sum of its dinucleotide sequences should be derived and the absorption spectrum of each dinucleotide sequence summed .

A simplification of this idea is to find the averaged incorporated spectra of the 4 bases from a large set of oligonucleotides. The coefficients of these 4 averaged spectra will form the first part of the Q matrix

$Q^T = B = [C_A \; C_G \; C_C \; C_T]$

To take the effect of the nearest neighbor into account, nothing will be changed to the coefficients of the matrix B but the matrix will be extended with a dinucleotide effect matrix D

$Q^T = [B \mid D] = [C_A \; C_G \; C_C \; C_T \mid C_{AG} \; C_{AT} \; C_{GG} \;...]$

Because the coefficients of B stay identical, the spectra corresponding to the coefficients of the matrix D will not be the spectrum of AG but the difference between the spectrum of AG and the sum of the spectra of A and G, and can thus become negative.

Modifications (a label, or biotinylation, or ...) will be treated in the same way by further extending the matrix Q with the M matrix:

$$Q^T = [B|D|M] = [C_A \; C_G \; Cc \; C_T \; | \; C_{AG} \; C_{AT} \; C_{GG} \cdots | \; C_{label1} \; C_{label2}]$$

And also contaminants can be taken into account.

$$Q^T = [B|D|M|C] = [C_A \; C_G \; C_C \; C_T \; | \; C_{AG} \; C_{AT} \; C_{GG} \cdots | \; C_{label1} \; C_{label2} \; | \; C_{contaminant1} \; C_{contaminant2}]$$

In this form, matrix Q contains integer numbers for the number of bases and nearest neighbors in a certain oligonucleotide molecule. If, however, we want to express the sample composition in terms of concentrations, the matrix Q has to be adapted.

$$Q^T = [B.C_1 | \; D.C_1 \; | \; | \; M.C_2 \; | \; C.C_3]$$

Here the dot between the matrices is not to be interpreted as the matrix product but as an entrywise product (or Hadamard product) with:

C1 : the sample oligo concentration matrix, a column vector with the concentration of each measured oligo, concentration expressed in millimolar (mM). Every number of a row of B and D is multiplied by the number of $C_1$ on the same row

C2 : the modification concentration matrix, a rectangular matrix with the same dimension as M. Contains the concentration of the modification as a relative number. A higher number corresponds to a higher labeling efficiency. Every element in M is multiplied with the corresponding element in $C_2$. Initially, each element of C2 is equal to the concentration of the oligo in the sample (assuming 100% labeling efficiency). During the recursive steps described below, the values of C2 evolve separately from C1. In the end, comparison of the obtained values in C2 with the corresponding values in C1 gives an indication about labeling efficiency.

C3: the contaminant concentration matrix, a rectangular matrix with the same dimension as C. Contains the concentration of each contaminant in each sample as a relative number. A higher number corresponds to a higher concentration of the given contaminant in the sample. In contrast to modifications, contaminants are initialized to a concentration of 1, in other words the concentration of a contaminant is independent of the concentration of the oligonucleotide.

In an analoguous way, matrix R can be split up in 3 matrices R1, R2 and R3 (R = [R1|R2|R3]):

R1: component contributions of the sequence features (bases and nearest neighbors used), corresponding to the first n columns of R, with n = number of columns of [B|D]. These component contributions may, depending on the prior information, be available as reference spectra.

R2: component contributions representative for the modifications

R3: component contributions representative for the contaminants

The spectra of the oligonucleotides can thus be calculated :

$$S_{ik} = [B|D].R1^T$$

In order to extract reference spectra for the remaining components, in the present example the following recursive algorithm is performed :

First an estimation is made for the component contributions R, which in the present example is done using the following steps :

● Using the customer data, the matrices B and D are filled
● With a table of the molar extinction coefficients of every base and/or dinucleotide the 260nm extinction of every sample is calculated
● Using the measured 260nm absorption value of every sample, the molar concentration is calculated and the matrix $C_1$ is filled
● Using the customer data, M is filled. In this first step $C_2$ equals $C_1$.
● Using the customer data C is filled. In this first step, $C_3$ is filled with 1's.
● Using all these matrices B, D, M, C, $C_1$, $C_2$ & $C_3$, compose Q and use the above equation (Eq. III) to calculate R.

After the component contributions R are estimated, the coefficients (composition information) is recalculated based on the first estimation of the component contributions R, in the present done by performing the following steps

- Calculate the predicted spectra (S) of the oligonucleotides using eq. IV
- For each sample k, measure the concentration of the oligo, the modifications and the contaminants
  $[C1_k|C2_k|C3_k] = pinv([S_k|R2_k|R3_k]).A_k^T$

Thereafter a new estimation of the components contribution R is determined, in the present example using the following steps :

- With the new values of C1 C2 C3 recompose Q
- Recalculate R using eq. III

Determination of the estimation of the composition information and the components constribution can be done by iteration until C1, C2, C3 and R converge (which seems to be the case).

Thereafter a residue calculation can be performed, in the present example using the following steps :

- Now calculate the fitted spectra by multiplying the matrices Q and R
- Compare these with the measured spectra A by calculating the RMSE

A sample with the largest residue may be removed in order to obtain faster convergence. Optionally, also more samples may be removed.

- The measurement with the largest residue is now removed from the set
- The Iteration is repeated (by removing the largest residue, the remaining set will converge to values resulting in smaller average residue)

Using this refined model, the individual bases in the oligonucleotide are quantified using eq. II. By comparing the obtained measured base concentrations with the basecomposition derived from the sequence (matrix B), oligonucleotides that don't match the proposed sequence can be identified.

Modification/labeling efficiency can be estimated by comparing matrices C1 and C2. An attempt can be made to identify unknown contaminants by comparing the spectra in R3 to a database of known spectra.

The above algorithm indicates features and advantages that can be obtained using a method as described in an embodiment of the present invention.

In one aspect, the present invention also relates to a system for performing analysis of spectrophotometer data of one or more samples consisting of a number of constituents. The system comprises an input means for obtaining prior information for the one or more samples regarding their constituents and for obtaining UV-VIS spectrophotometer data for the one or more samples. The latter may be an input port for receiving prior information and spectrophotometer data. Alternatively the input means may also comprise a measurement system for recording UV-VIS spectrophotometer data such as for example a spectrophotometer. The system furthermore comprises a processing means programmed for defining a number of overlapping components contributing in the UV-VIS spectrophotometer data, the number of components comprising one or more components assigned to known constituents of the one or more samples and the number of components comprising one or more components that cannot be assigned to known constituents of the one or more samples. Such a processing means may be for example a CPU although embodiments of the present invention are not limited thereto. The processing means according to embodiments of the present invention furthermore is programmed for using the prior information for the one or more samples regarding their constituents and using the UV-VIS spectrophotometer data, estimating the constituents composition and the component contributions to the UV-VIS spectrophotometer data for the number of components for the one or more samples by minimizing a residue between the UV-VIS spectrophotometer data and a fit based on said constituent composition and said component contributions, thus obtaining information regarding the one or more components that cannot be assigned to known constituents of the one or more samples. Such information may be putted out using an outputting means, such as e.g. a memory, a display, a printer or a plotter.

In another aspect, the present invention relates to a method for extracting component contributions, e.g. reference spectra for particular constituents of the sample of for contributions of such constituents being modified, disturbed or being in a particular environment. The reference spectra can be extracted using methods as described above.

In one aspect, the present invention also relates to the use of a method as described above for particular applications. One of these applications may be identifying and/or quantifying contaminants in DNA or RNA samples. The contaminatns may be protein contamination. The contaminants in one application may be PCR-inhibiting contaminants. Another application envisaged is the quantification of an amount of double-stranded DNA in a mixture of double-stranded DNA and single-stranded RNA or DNA. Still a further application is determination of the composition of a polynucleotide or protein. A further application is the quantification of the modification efficiency in a sample. The method also may be applied for validating a sample composition or a constituent thereof or group of constituents thereof. By extension the method allows to extract more detailed information about the composition of a component, in particular of polymers, and more specifically in biopolymers such as polynucleotides and proteins. Inversely, the method also allows to extract quantitative information of polymers based on the a priori knowledge of the composition of the known components, rather than the knowledge of the spectrum of the component. An example thereof is the quantification of correctly synthesised oligonucleotides relying on the known composition of the oligo in a sample that is suspected to be contaminated either by incompletely synthesized oligo's or by oligonucleotides synthesized in a previous run.

In still another aspect, embodiments of the present invention also relate to computer-implemented methods for performing at least part of the methods for analyzing spectrophotometer data. Embodiments of the present invention also relate to corresponding computer program products. The methods may be implemented in a computing system. They may be implemented as software, as hardware or as a combination thereof. Such methods may be adapted for being performed on computer in an automated and/or automatic way. In case of implementation or partly implementation as software, such software may be adapted to run on suitable computer or computer platform, based on one or more processors. The software may be adapted for use with any suitable operating system such as for example a Windows operating system or Linux operating system. The computing means may comprise a processing means or processor for processing data. According to some embodiments, the processing means or processor may be adapted for analyzing spectra according to any of the methods as described above or extracting reference spectra according to any of the methods as described above. Besides a processor, the computing system furthermore may comprise a memory system including for example ROM or RAM, an output system such as for example a CD-rom or DVD drive or means for outputting information over a network. Conventional computer components such as for example a keybord, display, pointing device, input and output ports, etc also may be included. Data transport may be provided based on data busses. The memory of the computing system may comprise a set of instructions, which, when implemented on the computing system, result in implementation of part or all of the standard steps of the methods as set out above and optionally of the optional steps as set out above. The obtained results may be outputted through an output means such as for example a plotter, printer, display or as output data in electronic format.

Further aspect of embodiments of the present invention encompass computer program products embodied in a carrier medium carrying machine readable code for execution on a computing device, the computer program products as such as well as the data carrier such as dvd or cd-rom or memory device. Aspects of embodiments furthermore encompass the transmitting of a computer program product over a network, such as for example a local network or a wide area network, as well as the transmission signals corresponding therewith.

## Claims

1. A method (100) for analyzing UV-VIS spectrophotometer data of one or more samples , the one or more samples consisting of a number of constituents, the method comprising

   - obtaining (120) prior information for the one or more samples regarding their constituents,
   - obtaining (110) UV-VIS spectrophotometer data for the one or more samples,
   - defining (130) a number of overlapping components contributing in the UV-VIS spectrophotometer data, the number of overlapping components comprising one or more components assigned to known constituents of the one or more samples and the number of components comprising one or more components that cannot be assigned to known constituents of the one or more samples,
   - using the prior information for the one or more samples regarding their constituents and using the UV-VIS spectrophotometer data, estimating (140) the constituents composition and the component contributions to the UV-VIS spectrophotometer data for the number of components for the one or more samples by minimizing a residue between the UV-VIS spectrophotometer data and a fit based on said constituent composition and said component contributions, thus obtaining information regarding the one or more components that cannot be assigned to known constituents of the one or more samples.

2. A method (100) according to claim 1, wherein estimating (140) the constituents composition and the component contributions to the UV-VIS spectrophotometer data for the number of components for the one or more samples by minimizing a residue between the UV-VIS spectrophotometer data and a fit based on said constituent composition and said component contributions is performed iteratively (150) until a residue smaller than a predetermined level is obtained.

3. A method (100) according to any of the previous claims, the method furthermore comprising cross-checking the prior information based on any or more of the constituents composition, the component contribution or the residue between the UV-VIS spectrophotometer data and the fit.

4. A method (100) according to any of the previous claims, wherein said prior information comprises reference contributions in UV-VIS spectrophotometer data for components assigned to known constituents and wherein said estimating the constituents composition and the component contributions comprises

 - estimating the component contributions to the UV-VIS spectrophotometer for all components based on the reference contributions and
 - determining an estimate for the constituents composition based on minimization of the residue between the UV-VIS spectrophotometer and the fit based on said estimated component contributions to the UV-VIS spectrophotometer data for all components.

5. A method (100) according to any of the previous claims, wherein said prior information comprises constituent composition information for the one or more samples for the known constituents and wherein said estimating the constituents composition and the component contributions comprises

 - estimating the constituent composition for all constituents based on the prior information on the constituent composition information for the one or more samples for the known constituents, and
 - determining an estimate for the component contribution to the UV-VIS spectrophotometer data based on minimization of the residue between the UV-VIS spectrophotometer data and the fit based on said estimated constituent composition for all constituents.

6. A method (100) according to any of claims 4 or 5, wherein the constituent composition and the component contributions are interrelated by a model defining weighing factors for component contributions as function of the constituent composition and wherein determining an estimate for the constituent composition or for the component contribution comprises taking into account the weighing factors.

7. A method (100) according to any of the previous claims in as far as dependent on claim 2, wherein analysis is performed on spectrophotometer data for a plurality of samples, and wherein said iteratively estimating is performed for those samples having the smallest residue.

8. A method (100) according to any of the previous claims, wherein the components that cannot be assigned to known constituents of the one or more samples are representative for any or more of modified constituents, neighbouring effects of different constituents, contaminations in the one or more samples, turbidity caused by concentration or aggregation effects or scattering from residual particles.

9. A method (100) according to any of the previous claims, the method comprising using spectrophotometric data of a plurality of samples, wherein the samples comprises at least one sample wherein at least one unknown constituent is present and at least one sample wherein the at least one unknown constituent is absent.

10. A method (100) according to any of the previous claims, wherein the constituents comprise a plurality of oligo's and wherein the prior information comprises an oligonucleotide present in the sample.

11. A method (100) according to any of the previous claims, wherein the number of components are determined by component analysis.

12. A method (100) according to claim 11, wherein the number of components are determined based on principal component analysis.

13. A system for analyzing UV-VIS spectrophotometer data of one or more samples , the one or more samples consisting of a number of constituents, the system comprising

 - an input means for obtaining prior information for the one or more samples regarding their constituents and for obtaining UV-VIS spectrophotometer data for the one or more samples,
 - a processing means programmed for defining a number of components contributing in the UV-VIS spectrophotometer data, the number of components comprising one or more components assigned to known constituents of the one or more samples and the number of components comprising one or more components that cannot be assigned to known constituents of the one or more samples,

the processing means furthermore being programmed for using the prior information for the one or more samples regarding their constituents and using the UV-VIS spectrophotometer data, estimating the constituents composition and the component contributions to the UV-VIS spectrophotometer data for the number of components for the one or more samples by minimizing a residue between the UV-VIS spectrophotometer data and a fit based on said constituent composition and said component contributions, thus obtaining information regarding the one or more components that cannot be assigned to known constituents of the one or more samples.

14. Use of a method according to any of claims 1 to 12 for any of identifying and/or quantifying contaminants in DNA or RNA samples, quantifying an amount of double-stranded DNA in a mixture of double-stranded DNA and single-stranded RNA or DNA, obtaining the composition of a polynucleotide or protein, quantification of the modification efficiency in a sample, or validating a sample composition or constituent thereof.

15. A computer program product for, if implemented on a processing unit, performing a method according to any of claims 1 to 12.

100

Obtaining absorbance spectra of one or more samples

110

Obtaining a priori knowledge about the one or more samples

120

Deriving a number of overlapping components within the samples from a priori info, the number of components comprising at least one unknown component.

130

Estimating the constituents composition and the component contributions by minimizing a residue between the UV-VIS spectrometer data and a fit based on the constituent composition and the components contributions

140

Further minimizing the total residue in an iterative way

150

Using the residue of each sample to check the available a priori information

160

FIG. 1

FIG. 2

FIG. 3

Europäisches
Patentamt

European
Patent Office

Office européen
des brevets

# EUROPEAN SEARCH REPORT

Application Number

EP 11 16 8005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DIRK W. LACHENMEIER ET AL: "Multivariate Curve Resolution of Spectrophotometric Data for the Determination of Artificial Food Colors", JOURNAL OF AGRICULTURAL AND FOOD CHEMISTRY, vol. 56, no. 14, 1 July 2008 (2008-07-01), pages 5463-5468, XP55005356, ISSN: 0021-8561, DOI: 10.1021/jf800069p | 1-7, 11-13,15 | INV. G01N21/33 |
| Y | * page 5463 - page 5466 * | 10,14 | |
| Y | AZZOUZ ET AL: "Application of multivariate curve resolution alternating least squares (MCR-ALS) to the quantitative analysis of pharmaceutical and agricultural samples", TALANTA, ELSEVIER, AMSTERDAM, NL, vol. 74, no. 5, 18 January 2008 (2008-01-18), pages 1201-1210, XP022426331, ISSN: 0039-9140, DOI: 10.1016/J.TALANTA.2007.08.024 * page 1201 - page 1204 * | 1-15 | |
| Y | W. KESSLER ET AL: "Multivariate Curve Resolution - Integration von Wissen in Chemometrische Modelle", CHEMIE INGENIEUR TECHNIK, vol. 82, no. 4, 1 April 2010 (2010-04-01), pages 441-451, XP55005355, ISSN: 0009-286X, DOI: 10.1002/cite.200900176 * page 441 - page 444 * | 1-15 | TECHNICAL FIELDS SEARCHED (IPC)  G01N |

-/--

The present search report has been drawn up for all claims

| Place of search | Date of completion of the search | Examiner |
|---|---|---|
| Munich | 23 August 2011 | Hoogen, Ricarda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

**Application Number**

EP 11 16 8005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE JUAN: "Chemometrics applied to unravel multicomponent processes and mixtures: Revisiting latest trends in multivariate resolution", ANALYTICA CHIMICA ACTA, vol. 500, no. 1-2, 1 January 2003 (2003-01-01), pages 195-210, XP55005359, ISSN: 0003-2670 * page 195 - page 200 * | 1-15 | |
| Y | GARRIDO: "Multivariate curve resolution-alternating least squares (MCR-ALS) applied to spectroscopic data from monitoring chemical reactions processes", ANALYTICAL AND BIOANALYTICAL CHEMISTRY, vol. 390, no. 8, 1 January 2008 (2008-01-01), pages 2059-2066, XP55005358, ISSN: 1618-2642 * the whole document * | 1-15 | TECHNICAL FIELDS SEARCHED (IPC) |
| Y | JAUMOT J ET AL: "Resolution of Parallel and Antiparallel Oligonucleotide Triple Helices Formation and Melting Processes by Multivariate Curve Resolution", JOURNAL OF BIOMOLECULAR STRUCTURE & DYNAMICS, vol. 21, no. 2, October 2003 (2003-10), pages 267-278, XP009151445, * the whole document * | 10,14 | |

-/--

The present search report has been drawn up for all claims

| Place of search | Date of completion of the search | Examiner |
|---|---|---|
| Munich | 23 August 2011 | Hoogen, Ricarda |

EPO FORM 1503 03.82 (P04C01)

| | Europäisches Patentamt European Patent Office Office européen des brevets | **EUROPEAN SEARCH REPORT** | Application Number EP 11 16 8005 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SAURINA: "Procedure for the quantitative determination of mixtures of nucleic acid components based on multivariate spectrophotometric acid-base titrations", ANALYTICAL CHEMISTRY, vol. 71, no. 1, 1 January 1999 (1999-01-01), pages 126-134, XP55005373, ISSN: 0003-2700 * page 126 - page 131 * ----- | 14 | |

TECHNICAL FIELDS
SEARCHED (IPC)

The present search report has been drawn up for all claims

| Place of search | Date of completion of the search | Examiner |
|---|---|---|
| Munich | 23 August 2011 | Hoogen, Ricarda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SPJOTVOLL et al.** *Technometrics,* 1982, 24